Europäisches Patentamt

European Patent Office

Office européen des brevets

(11) Publication number: 0 384 581
A1

## EUROPEAN PATENT APPLICATION

(21) Application number: 90300834.0

(51) Int. Cl.⁵: H04Q 11/04

(22) Date of filing: 26.01.90

The title of the invention has been amended (Guidelines for Examination in the EPO, A-III, 7.3).

(30) Priority: 22.02.89 GB 8903995

(43) Date of publication of application:
29.08.90 Bulletin 90/35

(84) Designated Contracting States:
DE ES FR IT NL

(71) Applicant: STC PLC
1B Portland Place
London W1N 3AA(GB)

(72) Inventor: Jessop, Anthony
48 Watlingen Road
Harlow, Essex(GB)
Inventor: Sexton, Michael James
47 Curlew Crescent
Basildon, Essex(GB)

(74) Representative: Dupuy, Susan Mary et al
STC Patents West Road
Harlow Essex CM20 2SH(GB)

(54) Cross-connect core switch and method for increasing its capacity.

(57) A cross connect core switch comprises two or more sub-assemblies (41, 42) each of which includes a plurality of core cards associated with a back plane having a respective multiline bus (31, 32). Means (38, 39, 43) are provided on each core card of a sub-assembly so that each core card can assemble outputs from the bus lines of both or all sub-assemblies rather than just the bus lines on its own back plane.

Fig. 4.

# TRANSMISSION NETWORKS.

This invention relates to transmission networks and managed transmission systems and in particular to synchronous cross connects (cross connect switches) therefor.

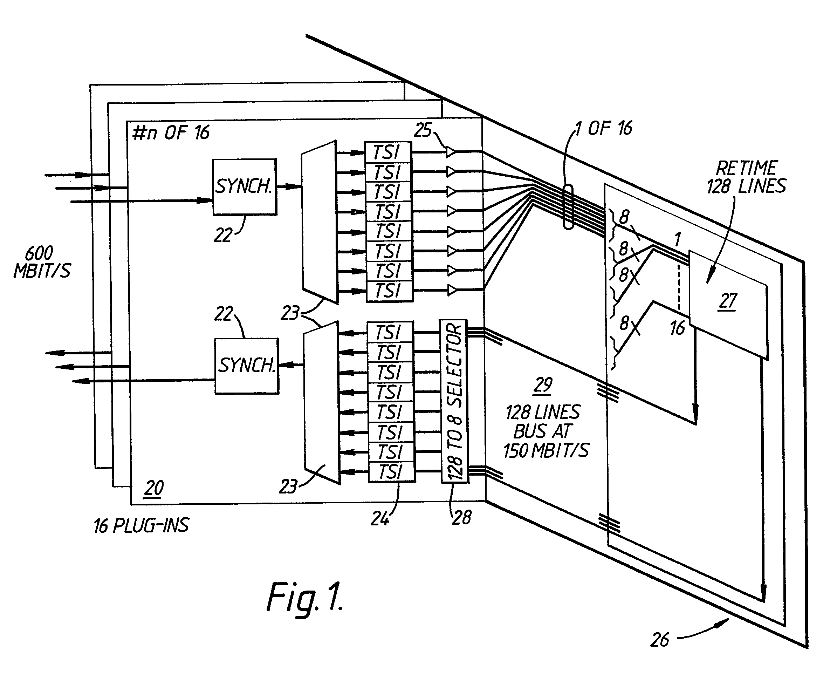

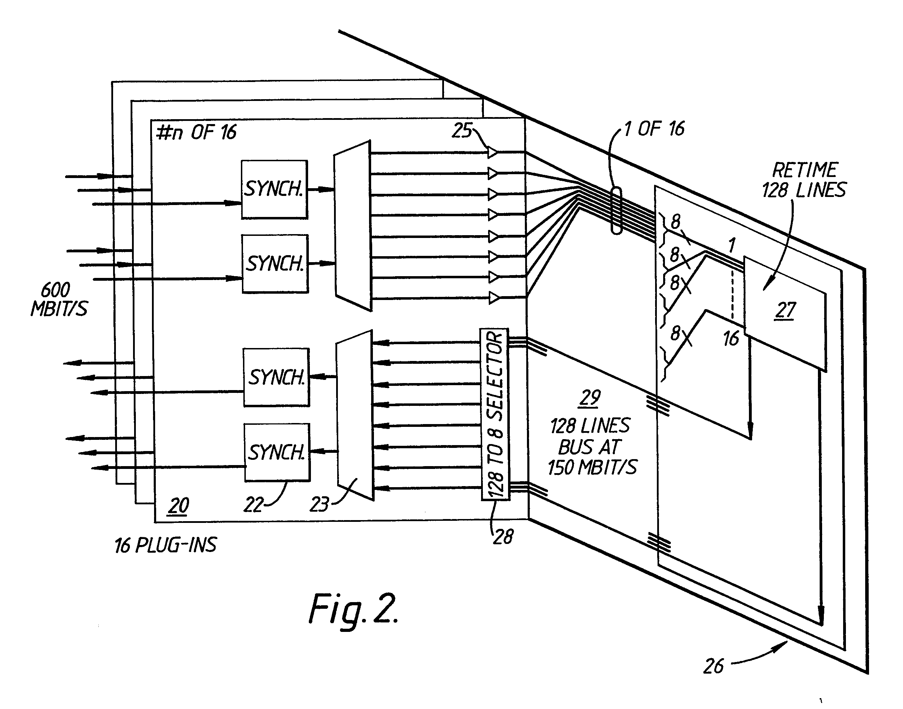

In our co-pending GB Application No. 8825434.7 (A. Jessop - M. Sexton 10-6) (European Application No. 89310875.3) there is described a cross connect system wherein for cross connecting a plurality of digital rates the rates are justified up to synchronous rates, which justified synchronous rates are chosen to have a whole number relationship with one another whereby all cross connects are permitted to be in a single array. The aggregate signal composed of multiplexed synchronised tributary signals is termed the Synchronous Cross Connect Signal, SXS. The physical structure of two variants proposed in our co-pending Application is illustrated in Figures 1 and 2 of the accompanying drawings.

Figure 1 illustrate a time/space/time switch (cross connect) (10 gigabits). The complete structure is implemented in one shelf with up to sixteen identical switch (core) card 20. Each switch card processes four SXS which in this example are shown as a serial multiplexed signal and includes synchronising function 22, multiplexing from or demultiplexing to SXS's 23, a 16 X 64 port TSI (time slot interchanger) functions 24, eight line drivers 25, and a 128 to 8 line decoder (selector) 28. The cards 20 are plugged into a back plane 26 having a retiming function 27 and a 128 line bus 29. Each switch card 20 sends 8 x SXS to the retiming function 27. All 128 SXS's so received are retimed from a single clock and are launched into bus 29, each line thereof being terminated in the characteristic impedance. The selector (decoder) 28 selects any 8 from the 128 lines available dynamically under the control of a configuration memory.

Figure 2 illustrates a similar arrangement which is a space switching matrix (cross connect) (20 gigabits). In this case each switch card processes eight SXS and hence includes extra synchronising function 22 which in the case of non time divided SXS switching allow twice the capacity to be presented. The TSI functions are not required in this case.

The above arrangements have a maximum switch capacity of approximately 20 Gigabit/s. It is an object of the present invention to provide a cross-connect with a greater capacity.

According to one aspect of the present invention there is provided a cross connect core switch comprising two or more cross connect core switch sub-assemblies, each sub-assembly including a plurality of core cards associated with a back plane having a respective multiline bus, and wherein each core card can assemble outputs from the bus lines of all of the sub-assemblies.

According to another aspect of the present invention there is provided a method of increasing the capacity of a cross connect core switch comprising the steps of mounting two or more cross connect core switch shelves along side one another, providing each core card of the core switches with a selector switch for each core switch shelf so mounted together, and linking the shelves together whereby each card can assemble outputs from all of the bus lines associated with all of the shelves rather than just the bus lines associated with its own shelf.

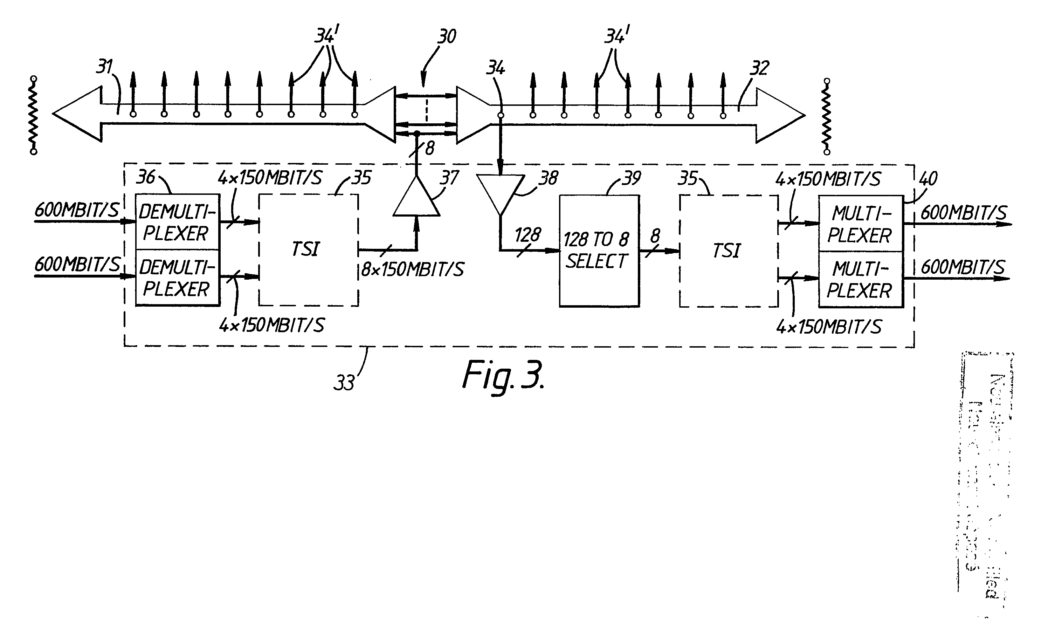

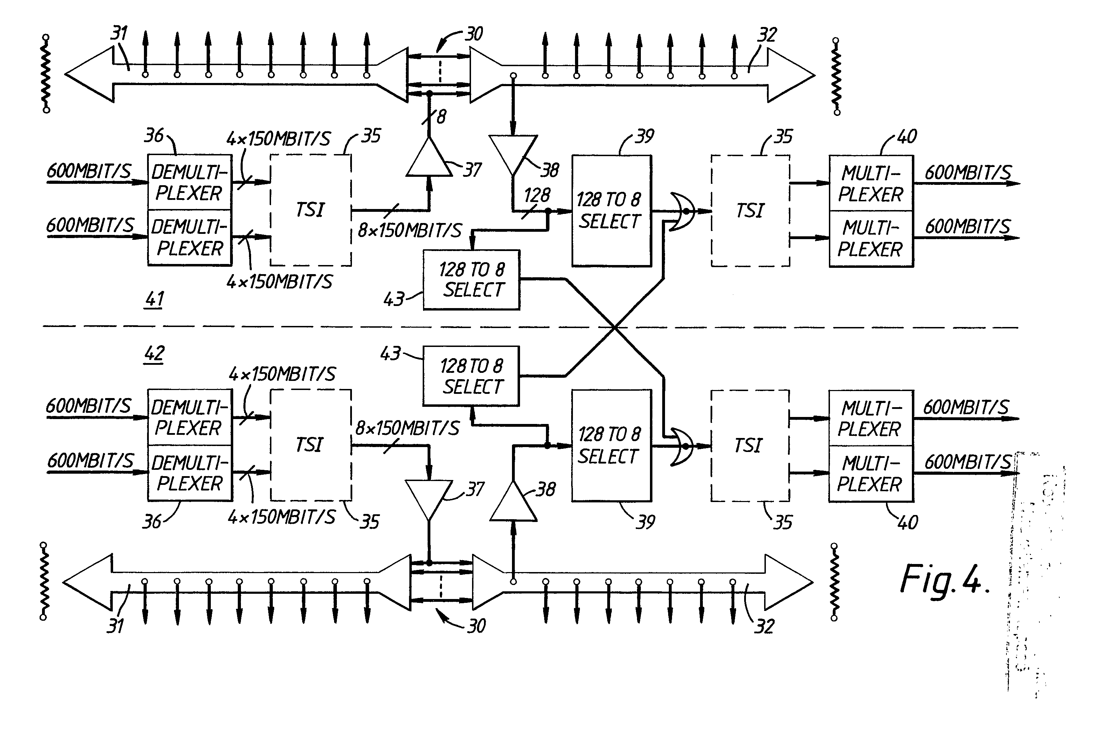

Embodiments of the present invention will now be described with reference to Figures 3 and 4 of the accompanying drawings which illustrate respectively and somewhat schematically a time/space/time cross connect core switch with a capacity up to 20 Gigabits in a different manner to that of Figures 1 and 2, and a space switching matrix cross connect core switch with a capacity of up to 40 Gigabits.

The arrangement shown in Figure 3 is equivalent to that of Figures 1 and 2 but drawn in a different manner. The retiming function is ideally centrally located on the shelf to minimise bus loading and timing problems. Thus there is ideally a common central drive point (30-Figure 3) for all the transmission line buses of the back plane. In Figure 3 the line buses are illustrated in two parts 31 and 32 extending away from the central drive part 30. A single core card is illustrated within dashed box 33. This interfaces to the back plane at the central drive point 30 and interfaces from the back plane at a respective point 34. It will be appreciated that a plurality of other core cards (up to 15) may be provided, each of which interfaces with the back plane at the central drive point but interfaces therefrom at a respective point corresponding to 34 as indicated by the arrows 34'. In the case in question the bus is a 128 balanced line bus, the core card within box 33 interfaces to 8 of these lines, and the other fifteen cards interface to the other 120 lines thereof. The card within box 33 is equivalent to card 20 of Figure 2. If the TSI function of the dashed box 35 is incorporated in the card then it will be equivalent to card 20 of Figure 1. The other elements within box 33 are functionally equivalent to the elements of the card 20 of Figure 2. A 600Mbit input signal is applied to demultiplexer 36 which performs demultiplexing to produce four 150Mbit/s SXS signals. In the case where TSI 35 is not present, two 600Mbit/s input signals give eight demultiplexed 150Mbit/s signals which pass directly to eight bus (line) drivers, illustrated schematically by a single bus driver 37, which drive eight of the 128 bus lines, as referred to above. Each card has 128 bus receivers, illustrated schematically as a single bus receiver 38 and hence by means of a 128 to 8 selector 39 outputs can be assembled from the whole back plane capacity. These outputs are indicated as applied as two sets of four 150Mbit/s signals to two multiplexers 40 which perform multiplexing to produce 600Mbit/s output signals as indicated. The demultiplexer 36 in addition performs the synchronising functions of bit alignment, frame alignment and ensures that all signals are correctly aligned with the core switch frame.

The maximum capacity of the core switch is limited by the gross capacity of the back plane. The maximum capacity of the cross connect core switch described above with sixteen cards per shelf is 20 Gigabit/s, and this is as large as one can conveniently fit on a standard shelf. However such an arrangement can readily be adapted to achieve a cross connect core switch with increased capacity, for example the arrangement in Figure 4 is a core connect switch with capacity up to 40 Gigabit/s, i.e. double the capacity . It comprises two closely associated shelves 41, 42 which each have sixteen core cards per shelf. The shelves 41, 42 may be bolted together and possibly have a common back plane, although as illustrated, there are two separate back planes. A second 128 to 8 selector 43 is provided on all cards and the shelves are linked as indicated so that each card can assemble outputs from all 256 bus lines, thus achieving a 40 Gigabit/s capacity. The linkings (between shelves interconnection) can either be via front panel connections or via the back plane if the shelves are bolted together.

The maximum capacity of the cross connect core switch of Figure 3 can be further increased, such as tripled, in a similar manner. In this case three shelves are closely associated with one another and each card includes three 128 to 8 selectors so that each card can assemble outputs from all 384 bus lines. Higher factors than tripling can be similarly achieved. The possibility of use of higher factors than doubling will of course depend on the degree of synchronisation that can be achieved at the high speeds being employed. By this means a single cross connect core design can be employed for different capacities than that provided by the basic design simply by mounting similar shelves together/alongside one another, increasing the selector switch in line with the number of shelves and linking the shelves together electrically.

Whereas the shelves are described above as joined together in particular manners, these are not to be considered the only possibilities.

## Claims

1. A cross connect core switch comprising two or more cross connect core switch sub-assemblies, each sub-assembly including a plurality of core cards associated with a back plane having a respective multiline bus, and wherein each core card can assemble outputs from the bus lines of all of the sub-assemblies.

2. A cross connect core switch as claimed in claim 1, wherein each sub-assembly is implemented in a respective shelf and each core card of a sub-assembly interfaces to a respective plurality of bus lines via a common drive point disposed centrally of the respective shelf.

3. A cross connect switch as claimed in claim 2 wherein a means providing a retiming function is disposed centrally of the respective shelf.

4. A cross connect core switch as claimed in any one of claims 1 to 3 wherein the two or more core switch sub-assemblies have a common back plane.

5. A cross connect core switch as claimed in any one of claims 1 to 3 wherein each sub-assembly has a respective back plane and each core card includes a respective receiver for each bus line of the respective back plane and includes means to select a predetermined number of bus line outputs from the plurality of bus lines of the respective back plane, and wherein for each sub-assembly of the core switch each core card also includes a further selection means whose output is coupled to a respective core card of another of said sub-assemblies whereby each core card can assemble outputs from the bus lines on the back planes of all of the sub-assemblies.

6. A method of increasing the capacity of a cross connect core switch comprising the steps of mounting two or more cross connect core switch shelves along side one another, providing each core card of the core switches with a selector switch for each core switch shelf so mounted together, and linking the shelves together whereby each card can assemble outputs from all of the bus lines associated with all of the shelves rather than just the bus lines associated with its own shelf.

Fig.1.

EP 0 384 581 A1

Fig. 2.

#n OF 16

SYNCH.

SYNCH.

SYNCH.

SYNCH.

25

1 OF 16

RETIME
128 LINES

27

600
MBIT/S

20

22

23

128 TO 8 SELECTOR

28

29
128 LINES
BUS AT
150 MBIT/S

8
8
8
8
1
16

26

16 PLUG-INS

Fig. 3.

34'   30   34'

31   34   32

36   4×150MBIT/S   35   37   38   39   35   4×150MBIT/S   40

600MBIT/S   DEMULTI-PLEXER   TSI   128   128 TO 8 SELECT   8   TSI   MULTI-PLEXER   600MBIT/S

600MBIT/S   DEMULTI-PLEXER   MULTI-PLEXER   600MBIT/S

4×150MBIT/S   8×150MBIT/S   4×150MBIT/S

8

33

Fig.4.

EP 0 384 581 A1

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2128850 (WESTERN ELECTRIC) <br> * page 4, line 97 - page 5, line 88; figure 3 * <br> * page 6, line 57 - page 7, line 21; figure 5 * <br> * page 7, lines 50 - 97; figures 9, 10 * | 1, 2, 4 | H04Q11/04 |
| A | | 5, 6 | |
| A | US-A-4725835 (SCHREINER ET AL.) <br> * column 3, line 52 - column 4, line 23; figure 1 * | 1, 2, 6 | |
| A | WO-A-8607228 (XITEL PTY) <br> * page 6, lines 7 - 33; figure 1 * <br> * page 9, lines 12 - 28 * | 1, 3 | |
| A | EP-A-0291135 (PHILIPS) <br> * the whole document * | 1, 2, 6 | |
| A | EP-A-0231630 (STC PLC) <br> * the whole document * | 1-6 | |

**TECHNICAL FIELDS SEARCHED (Int. Cl.5 )**

H04Q

The present search report has been drawn up for all claims

| Place of search | Date of completion of the search | Examiner |
|---|---|---|
| THE HAGUE | 28 MAY 1990 | KURVERS F.J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                
& : member of the same patent family, corresponding document

EPO FORM 1503 03.82 (P0401)